# EUROPEAN PATENT SPECIFICATION

(11) **EP 2 033 989 B1**
(45) Date of publication and mention of the grant of the patent: **29.06.2011**
(21) Application number: 07115610.3
(22) Date of filing: 04.09.2007
(51) Int. Cl.: C08K 5/16, C08K 5/37

(54) **Safer curing systems for acrylic rubbers compounds**
Sicherere Härtungssysteme für Acrylkautschukverbindungen
Systèmes de durcissement plus sûrs pour des composés de caoutchoucs acryliques

(43) Date of publication of application: 11.03.2009
(73) Proprietor: Rhein Chemie Rheinau GmbH, 68219 Mannheim (DE)
(72) Inventor: Bergmann, Cristina Dr., 50676 Köln (DE); Grieshaber, Willi, 68519 Viernheim (DE); Issel, Hans-Martin, Dr., 69469 Weinheim (DE); Säwe, Martin, Dr., 69488 Birkenau (DE); Kleinknecht, Harald, 55232 Alzey (DE)
(74) Representative: Siegers, Britta

(56) References cited:
- EP-A- 0 763 561
- JP-A- 11 140 264

## Description

The present invention relates to a specific mixture of vulcanisation accelerators and to crosslinked ethylene acrylate (AEM) and polyacrylate (ACM) elastomers prepared by the use of this specific mixture, Furthermore, the present invention is directed to methods for the production of the specific mixture of vulcanisation accelerators and for the respective new crosslinked ethylene acrylate (AEM) and polyacrylate (ACM) elastomers, Finally, the present invention relates to the use of a safer elastomer composition capable of producing gaskets, seals, hoses, etc, exhibiting remarkably shorter vulcanisation time, good processing and stability against premature scorch,

As a result of recent developments in technology the demand for high performance elastomers in automotive and industrial applications has increased considerably, Nowadays the advanced and complex design of the automotive components used in critical applications requires the development of new materials capable of withstanding these extreme conditions, Therefore, the key demands that have to be met by these materials are long-term heat and oil resistance,

A proposal for good oil resistance and reduced permanent set was made and comprises an acrylic rubber having a fumaric acid monolower-alkyl ester with an aromatic diamine vulcaniser and a guanidine vulcanisation aid (JP-A H11-92614) copolymerizes therein. The proposal did not solve the scorch, which is liable to occur at a vulcanisation step,

In another proposal 1,8-diazabicyclo[5.4,0]undecene-7, 1,5-diazabicyclo[4,3,0]nonene-5, or a salt of these compounds was used in an acrylic rubber, and use of the vulcanisation of the thus-obtained acrylic rubber composition in a polyamine vulcaniser (JP-A H11-80488), The same scorch problem occurs also in this proposal,

To improve the scorch resistance as well as the heat resistance and oil resistance, a carboxyl group-containing acrylic rubber, a primary monoamine compound and a polyamine crosslinking agent were used (EP 1 378 539).

In JP patent number 9-279958 for improving the scorch resistance, heat resistance, compression set characteristics, a carboxyl group-containing acrylic elastomer, a polyfunctional isocyanate compound as a vulcanising agent and a guanidine, a quaternary onium compound, a tertiary amine or a tertiary phosphine as a vulcanisation accelerator were used.

For improving the scorch resistance stability and compression set characteristics an acrylic elastomer composition was proposed in the JP patent number 9-316300, which comprises an unsaturated dicarboxylic acid monoalkyl ester-copolymerized acrylic elastomer, a diamine compound as a vulcanising agent, a guanidine compound as a vulcanisation accelerator and a benzothiazolylsulfeneamide-type compound as a vulcanisation accelerator,

For good compression set characteristics, JP A-50-45031 proposes an elastomer composition obtained by mixing hexamethylene diamine or hexamethylene diamine carbamate as a vulcaniser and 4,4'-methylenedianiline as a vulcaniser accelerator with an acrylate butenedionic acid monoester bipolymer or an ethylene-acrylate-butanedionic acid monoester terpolymer.

The same improvement was obtained in JP-A-11-140264 by mixing an acrylic elastomer with a diamine compound vulcanising agent, a guanidine compound vulcanisation accelerator and a benzolylsulfene amide type compound vulcanisation accelerator.

However, a compound having, as a crosslinking agent, a diamine such as hexamethylenediamine or hexamethylenediamine carbamate and amidine as a vulcanisation accelerator has a good compression set characteristic but the scorch time is short, the processing stability is not appropriate and the vulcanisation characteristics are poor.

The presence of the guanidine in the vulcanisation process of AEM or ACM polymer as an accelerator raised questions concerning the medical and toxicological aspects in the workplace environement. Several studies carried out on the reaction mechanism of the vulcanisation with guanidine accelerators have shown, that at elevated temperatures during vulcanisation, reactions products such as aromatic amine must be taken into consideration. These products can raise toxicological problems due to their toxicity and/or carcinogenic potential.

All things considered, there is still a high demand towards acrylic rubber compositions that bring a good balance between scorch behaviour, processability and vulcanisation characteristics.

The present invention solves the above-mentioned problems proposing a specific combination of vulcanisation accelerators for an acrylic rubber composition.

According to the present invention, a new combination of vulcanisation accelerators is proposed which comprises
(1) a first vulcanisation accelerator selected from the group consisting of an amine, a salt thereof, an amidine, a salt thereof and a mixture thereof,
(2) a second vulcanisation accelerator selected from the group consisting of a dithiophosphate (C₃-C₃₂) derivative or a zinc-dithiophosphate (C₃-C₃₂) derivative, a thiuram derivative, a zinc-dithiocarbamate derivative, and a mixture thereof.
Therefore, the first aspect of the present invention is a composition comprising
(1) a first vulcanisation accelerator selected from the group consisting of an amine, a salt thereof, an amidine, a salt thereof and a mixture thereof,
(2) a second vulcanisation accelerator selected from the group consisting of a dithiophosphate (C₃-C₃₂) derivative or a zinc-dithiophosphate (C₃-C₃₂) derivative, a thiuram derivative, a zinc-dithiocarbamate derivative, and a mixture thereof.

With this accelerator composition it is possible to prepare rubber compositions with shorter vulcanisation time, good processing properties and stability to premature scorch.

As a preferred embodiment of the present invention, the accelerator mixture comprises 1,8-diazabicyclo[5,4,0]undecene-7 or 1,5-diazabicyclo[4,3,0]nonene-5 as the first vulcanisation accelerator, From these, 1,8-diazabicyclo[5,4,0]undecene-7 is preferred.

Both compounds - 1,8-diazabicyclo[5,4,0]undecene-7 (DBU) and 1,5-diazabicyclo[4,3,0]nonene-5 (DBN) - are commercially available. For example, DBU is commercially avaiable from BASF under the trade mark Lupragen^{®} N700,

In respect of the second vulcanisation accelerator, it is preferred to use zinc-dithiophosphate (C₃-C₃₂) derivatives. Thiese zinc dithiophosphate (C₃-C₃₂) derivatives are in particular described in DE 22 22 781, which disclosure is incorporated by reference into the present invention,

Moreover, zinc-dithiophosphate (C₄-C₁₈) derivatives are in particular preferred.

The above-mentioned composition may comprise further components as outlined as follows:

### Filler

The above-mentioned composition of the accelerators (1) and (2) may further comprise a filler.

Examples of appropriate fillers include silica, inorganic mineral such as aluminum hydroxide, clay, talc, calcium carbonate, magnesium carbonate, carbon black and the like,

The filler may also be used as a blend (mixture) of the above-mentioned fillers.

The physical state in which the filler is present is immaterial, whether it be in the form of a powder, microbeads, granules or, alternatively, balls.

However, to prepare rubber compositions with shorter vulcanisation times, good processing and stability to premature scorch, for example, it is in particularly preferred to use at least silica,

The silica used may be any reinforcing silica known to those skilled in the art, in particular any of fumed silica or precipitated silica,

In a preferred embodiment of the present invention, the silica used has a BET surface area of preferably 60 to 350 m²/g, more preferably 85 to 300 m²/g, most preferably 100 to 250 m²/g,

Useable commercial available fillers are Sipernat^{®} 50, Perkasil^{®} SM 660, Tixosil^{®} 38 A, Ulfrasil^{®} VN2, and Aerosil^{®} 200.

In one embodiment in particular it is possible to use a combination of the above-mentioned silica and carbon black,

### Polymer bound material

Moreover, the composition according to the present invention comprises in a preferred embodiment of the present invention at least one rubber system as a polymer bound material. The use of a polymer bound material in the composition according to the present invention leads to some advantages: First of all, the resulting material becomes dust-free and it is much more easier to handle the compositions according to the present invention, In particular, the adhesion of the composition according to the present invention on parts of mechanical devices can be reduced, the saftety at work is enhanced and the dispersion of the composition according to the present invention proceeds much faster,

This polymeric material may be selected out of the group consisting of (1) acrylate rubber, (2) ethylene acrylate copolymer (ethylene acrylate rubber), (3) ethylene propylene diene terpolymer, (4) ethylene propylene copolymer, (5) ethylene vinyl acetate, (6) ethylene methyl acrylate, and mixtures thereof.

The respective polymer bound materials are known to the person skilled in the art,

The polymeric material functions as a binder material, in which the vulcanisation accelerators and optionally further additives are blended.

Reference EPM polymers are, for example, described in WO 96/15161 A1 incorporated by reference into the present invention.

In respect to the above-mentioned polymeric materials, the diene component of the (3) ethylene propylene diene terpolymer is preferably ethylidene norbornene (ENB), vinyl norbornene or dicyclopentadiene (DCPD).

### Further additives

The composition according to the present invention may further comprise suitable additives such as dispersants and plasticizers (e,g., paraffinic plasticizers) and colour master batches.

### Composition

The above-mentioned components are used in the composition according to the present invention preferably in specific amounts so that the content of the active first and second accelerator is as high as possible. However, a minimum amount of filler is necessary in order to bind the liquid parts of the composition according to the present invention. Furthermore, a minimum amount of polymeric bound material is necessary so that the resulting product is not hard and is easy in blending with the compositions to vulcanise.

The above-mentioned components are used in the composition according to the present invention preferably in the following amounts:
The vulcanisation accelerator (1) may be contained in the composition according to the present invention in an amount of preferably 5 to 85 wt.-%, more preferably 15 to 65 wt.-%, most preferably 25 to 45 wt.-%, in each case with respect to the total amount of the composition according to the present invention.
The vulcanisation accelerator (2) may be contained in the composition according to the present invention in an amount of preferably 5 to 75 wt.-%, more preferably 7 to 55 wt.-%, most preferably 10 to 35 wt.-%, in each case with respect to the total amount of the composition according to the present invention,
The filler may be contained in the composition according to the present invention in an amount of preferably 10 to 60 wt.-%, more preferably 12 to 50 wt.-%, most preferably 15 to 40 wt.-%, in each case with respect to the composition according to the present invention,
The polymeric binder may be contained in the composition according to the present invention in an amount of preferably 5 to 40 wt.-%, more preferably 7 to 35 wt.-%, most preferably 10 to 30 wt.-%, in respect to the composition according to the present invention.
The additives may be contained in the composition according to the present invention in an amount of preferably at most 10 wf.-%, more preferably at most 8 wt.-%, most preferably at most 6 wt.-%, in each case with respect to the total amount of the composition according to the present invention,
It goes without saying that the amounts of the above-mentioned components of the composition according to the present invention complement to 100 wt.-%.
The composition according to the present invention is prepared by mixing the different accelerators and - optionally - the further ingredients mentioned above, Thereby, the amounts of each component is chosen so that the resulting compositions preferably possess the above-mentioned constitution,
Thus, a further object of the present invention is a process for the preparation of the above-mentioned composition, wherein the respective components are mixed together.
The above-described composition may be used as a curative concentrate for crosslinking acrylic rubber compositions such as ethylene acrylate elastomers (AEM rubber systems) or polyacrylate elastomers (ACM rubber systems),
Thus, a further subject-matter of the present invention is the use of the above-described composition as a curative concentrate for crosslinking acrylic rubber compositions such as ethylene acrylate elastomers or polyacrylate elastomers,
In a preferred embodiment, the composition of the present invention may be used for curing an ethylene acrylic rubber (AEM rubber systems) or acrylic rubber (ACM rubber systems) both possessing a carboxylic cure site.
Ethylene acrylate (AEM) elastomers and polyacrylate (ACM) elastomers having small amounts of a butene dioic acid monoalkyl ester cure-site monomer present are widely used in the automotive industry because of their excellent resistance to lubricating oils and greases, heat and compression set resistance, mechanical toughness and low brittle point. As such, they are well suited for gaskets and seals, various types of automotive hoses, spark plug boots, and similar engine compartment rubber components. Typically a blend of the uncrosslinked (i.e., unvulcanized gum rubber) copolymer and diamine curing agent along with various fillers and other additives is subjected to a press-curing step at sufficient time, temperature and pressure to achieve covalent chemical bonding and crosslinking. Commercially, the practiced curing agent for AEM elastomer production is hexamethylene diamine carbamate (HMDC),
Respective rubber systems are, for example, disclosed in EP 1 378 539 A (ACM rubber systems), US 2,599,123 (AEM rubber systems) and EP 1 499 670 A (AEM) all of which are incorporated by reference into the present invention.
Furthermore, respective ACM-rubber systems are commercially available from Unimatec^{®} under the trademark Noxtite^{®} or from Zeon^{®} under the trademark Nipol^{®} AR Polymer and respective AEM-rubber systems are commercially available from DuPont under the trade mark Vamac^{®} Polymer.
In one embodiment, the above-described composition according to the present invention is used as a cure activator concentrate for crosslinking an acrylic rubber composition (ACM rubber systems) which comprises:
   (a) 80 to 99. 9% by weight of acrylic acid ester monomer units,
   (b) 0.1 to 20% by weight of carboxyl group-containing ethylenically unsaturated monomer units, and
   (c) 0 to 30% by weight of other copolymerizable monomer units,
The acrylic acid ester monomer units (a) are preferably derived from only an alkyl acrylate monomer, or a combination of an alkyl acrylate monomer with an alkoxyalkyl acrylate monomer. The combination of an alkyl acrylate monomer with an alkoxyalkyl acrylate monomer is especially preferable.
The alkyl acrylate monomer preferably includes those which have an alkyl group having 1 to 8 carbon atoms, and, as specific examples thereof, methyl acrylate, ethyl acrylate, n-propyl acrylate, n-butyl acrylate, isopropyl acrylate, isobutyl acrylate, n-hexyl acrylate, 2-ethylhexyl acrylate and cyclohexyl acrylate can be mentioned. Ethyl acrylate and n-butyl acrylate are especially preferable.
The alkoxyalkyl acrylate monomer preferably includes those which have an alkoxyalkyl group having 2 to 8 carbon atoms, and, as specific examples thereof, methoxymethyl acrylate, ethoxymethyl acrylate, 2-ethoxyethyl acrylate, 2-butoxyethyl acrylate, 2-methoxyethyl acrylate, 2-propoxyethyl acrylate, 3-methoxypropyl acrylate and 4-methoxybutyl acrylate can be mentioned. 2-Ethoxyethyl acrylate and 2-methoxyethyl acrylate are especially preferable,
In the case where an alkyl acrylate and an alkoxyalkyl acrylate are used in combination as the acrylic acid ester monomer (a), the amount of alkyl acrylate monomer units is preferably in the range of 30 to 90% by weight, more preferably 40 to 89% by weight and especially preferable 45 to 88% by weight, based on the acrylic acid ester monomer units (a). If the amount of alkyl acrylate monomer units is too small, tensile strength and elongation of a vulcanizate are liable to be poor. In contrast, if the amount of alkyl acrylate monomer units is too large, oil resistance tends to be poor.
The amount of acrylic acid ester monomer units (a) is in the range of 90 to 99.9% by weight, preferably 92.5 to 99.7% by weight and more preferably 95 to 99.5% by weight, based on the weight of acrylic rubber. If the amount of monomer units (a) is too small, strengths and elongation of a vulcanizate are liable to be poor, In contrast, if the amount of monomer units (a) is too large, the rubber composition becomes difficult to vulcanize.
As specific examples of the carboxyl group-containing ethylenically unsaturated monomer (b), carboxylic acid monomers such as acrylic acid, methacrylic acid, ethacrylic acid, itaconic acid, maleic acid, fumaric acid and citraconic acid; and butenedioic acid monoalkyl ester monomers such as monomethyl maleate, monoethyl maleate, mono-n-butyl maleate, monomethyl fumarate, monoethyl fumarate and mono-n-butyl fumalate can be mentioned. The carboxyl group may be a carboxylic acid anhydride group, and thus, carboxylic acid anhydride monomers such as maleic anhydride and citraconic anhydride can be used as the monomer (b), Of these monomers (b), butenedioic acid monoalkyl ester monomers are preferable, Monoethyl maleate, mono-n-butyl maleate, monoethyl fumarate and mono-n-butyl fumarate are especially preferable.
The amount of carboxyl group-containing ethylenically unsaturated monomer units (b) is in the range of 0,1 to 10% by weight, preferably 0,3 to 7.5% by weight and more preferably 0. 5 to 5% by weight, based on the weight of the acrylic rubber, If the amount of monomer units (b) is too small, the rubber composition becomes difficult to vulcanize. In contrast, if the amount of monomer units (b) is too large, rubber elasticity of a vulcanizate is poor,
The acrylic rubber may comprise units (c) of other copolymerizable monomers in addition to the above-mentioned monomer units (a) and monomer units (b). The optional monomer includes, for example, conjugated diene monomers, non-conjugated diene monomers, aromatic vinyl monomers, α-, β-ethylenically unsaturated nitrile monomers, amide group-containing acrylic or methacrylic monomers, polyfunctional diacrylic or dimethacrylic monomers and aliphatic vinyl monomers.
As specific examples of the optional monomer, conjugated diene monomers such as 1,3-butadiene, chloroprene and piperylene; non-conjugated diene monomers such as 1,2-butadiene, 1,4-pentadiene, dicyclopentadiene, norbornene, ethylidenenorbornene, hexadiene and norbornadiene; aromatic vinyl monomers such as styrene, α-methylstyrene and divinylbenzene; α-, β-ethylenically unsaturated nitrile monomers such as acrylonitrile and methacrylonitrile; amide group-containing acrylic or methacrylic monomers such as acrylamide and methacrylamide; polyfunctional diacrylic or dimethacrylic monomers such as ethylene glycol diacrylate, propylene glycol diacrylate, ethylene glycol dimethacrylate and propylene glycol dimethacrylate; and aliphatic vinyl monomers such as vinyl chloride, vinylidene chloride, vinyl acetate, ethyl vinyl ether and butyl vinyl ether can be mentioned,
The amount of monomer units (c) is in the range of 0 to 20% by weight, preferably 0 to 9.9% by weight, more preferable 0 to 7.2% by weight and especially preferably 0 to 4.5% by weight, based on the weight of the acrylic rubber, If the amount of monomer units (c) is too large, a vulcanizate is poor in oil resistance and other properties required for an acrylic rubber,
Such acrylic rubber compositions (ACM rubber systems) and methods for their preparation are disclosed, for example, in EP 1 378 539 A which is incorporated by reference into the present invention.
In one further embodiment, the above-described composition according to the present invention is used as a cure activator concentrate for crosslinking an AEM rubber system.
The alkyl acrylates useful in their preparation typically are selected from methyl acrylate and ethyl acrylate when ethylene is a comonomer (i.e., AEM elastomer), In such cases the methyl acrylate is preferred and comprises from about 40 to 75 weight percent of the terpolymer, preferably from 50 to 70 weight percent, A monoalkyl ester of 1,4-butene-dioic acid function as the cure-site monomer and comprises from about 0,5 to 10,0 weight percent of the terpolymer, In the AEM type elastomer the ratio of comonomers can be selected to influence the final properties, Thus good low temperature properties are derived from the non-polar ethylene monomer, while the polar methyl acrylate monomer provides the oil and fluid resistance, Similarly the relative amount of cure-site monomer influences the degree of crosslinking and resulting rheological and mechanical properties. Similarly, in the case of the poly alkyl acrylate polymer system (i.e., ACM elastomer) the alkyl acrylates usually employed are methyl or ethyl acrylate, n-butyl acrylate and 2-methoxy ethyl acrylate along with 1 ,4-butene dioic acid ester cure-site monomer, Again, the respective relative amounts of each can be selected such as to influence the properties of the resulting elastomer as generally known in the art.
Such acrylic rubber compositions (AEM rubber systems) and methods for their preparation are disclosed, for example, in EP 1 499 670 A which is incorporated by reference into the present invention.
One specific example of the AEM rubber systems is Vamac^{®} G as described in paragraph [0038] of EP 1 499 670 B1.
All of the above-mentioned acrylic rubber compositions may further comprise a diamine as a vulcanising agent, Thereby, it is preferred that the used diamine is especially hexamethylenediamine carbamate, This diamine is normally used in the respective rubber system in an amount of 0.1 - 8 parts by weight on the basis of 100 parts by weight of a carboxylic group-containing acrylic elastomer,
Furthermore, the present invention is directed to the above-mentioned acrylic rubbers which are obtained by using the above-described composition as a curative concentrate,
Moreover, a further subject-matter of the present invention is a vulcanisate of an AEM or ACM elastomer composition (an ethylene acrylate elastomer or acrylate elastomer based compound) which is prepared by crosslinking an ethylene acrylate elastomer or a polyacrylate elastomer by using the above-described composition of vulcanisation accelerators,
The amount of the first accelerator (1) in the respective acrylic rubber is preferably 0,1 to 10 parts by weight, more preferably 0,5 to 8 parts by weight, most preferably 1 to 5 parts by weight, in each case on the basis of 100 parts by weight of the acrylic rubber.
The amount of the second accelerator (2) in the respective acrylic rubber is preferably 0,1 to 10 parts by weight, more preferably 0,3 to 6 parts by weight, most preferably 0,5 to 4 parts by weight, in each case on the basis of 1 00 parts by weight of the acrylic copolymer.
In a further embodiment, this composition of an acrylic elastomer to be used in a vulcanisation reaction together with the composition according to the present invention may comprise a diamine, The diamine is preferably hexamethylenediamine carbamate which is used as a vulcanising agent in the acrylic copolymer composition,
The amount of the diamine in the respective acrylic copolymer composition is preferably 0,1 to 8 parts by weight, more preferably 0,5 to 6 parts by weight, most preferably 1 to 4 parts by weight, in each case on the basis of 100 parts by weight of the acrylic copolymer.
In a further embodiment, this composition of an acrylic rubber may comprise a filler, Thereby, the filler may be selected from the group consisting of silica, carbon black or inorganic materials such as aluminium hydroxide, clay, talc, calcium carbonate, magnesium carbonate and the like. The filler is preferably silica or carbon black, With respect to the specific embodiments of this filler, it is referred to the description above.
The amount of the filler in the respective acrylic copolymer composition is preferably 0 to 100 parts by weight, more preferably 5 to 80 parts by weight, most preferably 15 to 60 parts by weight, in each case on the basis of 100 parts by weight of the acrylic rubber.
In a further embodiment, this composition of an acrylic rubber may comprise a polymeric bound material, The polymeric bound material is already described above, to which it is referred.
The amount of the polymeric bound material in the respective acrylic copolymer composition is preferably 0 to 30 parts by weight, more preferably 0,5 to 20 parts by weight, most preferably 1 to 10 parts by weight, in each case on the basis of 100 parts by weight of the acrylic rubber.
In respect to specific embodiments of the polymeric bound material, it is referred to the description above,
In a further embodiment, this composition of an acrylic rubber may comprise further additives. These additives are preferably plasticizers. Further additives are known from the person skilled in the art,
The amount of the plasticizer in the respective acrylic rubber composition is preferably 0 to 100 parts by weight, more preferably 2 to 60 parts by weight, most preferably 5 to 20 parts by weight, in each case on the basis of 1 00 parts by weight of the acrylic copolymer.
The acrylic rubber composition can be prepared by an appropriate mixing procedure such as for example open roll mixing, Banbury mixing and screw mixing, The order in which the ingredients are mixed is not particularly limited, but, a mixing procedure can be adopted wherein ingredients incapable of being readily decomposed with heat are thoroughly mixed, and thereafter, ingredients capable of being readily reacted or decomposed with heat, such as a vulcanizing agent and a vulcanization accelerator, are added within a time as short as possible.
The method of shaping the rubber composition is not particularly limited, and any method can be employed which includes, for example, compression molding, injection molding, transfer molding and extrusion shaping, The method of vulcanization may be appropriately chosen depending upon the shape of vulcanizate. Vulcanization can be carried out either simultaneously with shaping, or after shaping,
The vulcanization of the acrylic rubber composition can be effected by heating. The heating temperature is preerably in the range of 130 to 220 °C, more preferably 140 to 200 °C. The vulcanization time is preferably in the range of 30 seconds to 2 hours. Additionally, a post cure might be applied, ranging from a few minutes to several hours with temperatures between 130 °C to 220 °C. The method of heating may be chosen from those which are conventionally employed for vulcanization of rubbers, such as press heating, steam heating, oven heating and hot-air heating. After vulcanization is once carried out, the obtained-vulcanizate may be further vulcanized by heating for a longer time to complete the vulcanization of interior part of the vulcanizate, The vulcanization time of such post vulcanization may be varied depending upon the heating method, the vulcanization temperature and the shape of vulcanizate, but the vulcanization time is preferably in the range of 1 to 10 hours. The heating method and the heating temperature may be appropriately chosen,
These rubber systems may be used to achieve thermoset rubber articles, especially gaskets, seals, hoses, membrane and o-rings.
The present invention is described in detail in the following examples.

### Example 1

Example 1 shows a comparative evaluation of a series of six compounds, prepared with different vulcanisation systems (hexamethylene diamine carbamate is the vulcanisation agent used for all compounds, while different vulcanisation accelerators are employed, for example an amidine or the aboved-descriebed composition as a curative concentrate). In each respective compound a commercial AEM polymer was used. The AEM is a random ethylene/methyl acrylate copolymer which encloses 41% by weight ethylene and 55% methyl acrylate and having 4 weight % methyl hydrogen maleate termonomer present as the cure-site monomer.

The 1 ^{st} compound employed 1.5 parts per weight HMDC per 1 00 parts of the AEM terpolymer. The compound 2 is the control and contained 4 parts per weight DOTG, Compound 3 contained 1.3 parts per weight 1,8-diazabicyclo[5,4,0]undecene-7 (DBU) while compounds 4 to 6 employed 3, 3.7 and 4 parts respectively per weight of aboved-descriebed composition as a curative concentrate (hereinafter referred to as "XLA"). Each compound contains additionally 30 parts by weight carbon black along with processing aids, antioxidant as shown in Table 1.

The respective compounds were blended in an internal mixer (W&P GK 5E) with a 70% filling factor using an upside down procedure. The dump temperature registered was 100°C, In order to obtain a homogeneous mixture, further the mixing process was continued on the mill (Rubicon MT 6"x13") at 40°C for 6 min, The mixtures were press-cured in slabs of 13.5 cm x 13.5 cm at 180°C and then post-cured at 175°C for four hours at ambient pressure,

From the rheology results of the investigated compounds valuable information was acquired, It can be seen a tendency to scorch and higher viscosity for the compound which enclosed DBU, By using the product XLA good stability against premature scorch and mooney viscosity was obtained when compared with DBU and comparable values when compared with the control,

The good processability of product XLA as well as DOTG was noticed by investigating the flow properties, On the other side, the compound having DBU evinced poor processability,

Poor vulcanisation characteristics as well as processability characteristics was clearly observed for the compound 1 when no vulcanisation accelerator was used.

**Table 1. Properties of compounds prepared with different vulcanisation systems**

| Compound | 1 | 2 | 3 | 4 | 5 | 6 |
|---|---|---|---|---|---|---|
| AEM | 100 | 100 | 100 | 100 | 100 | 100 |
| Carbon Black, N-550 | 30 | 30 | 30 | 30 | 30 | 30 |
| Vanfre VAM | 1 | 1 | 1 | 1 | 1 | 1 |
| Stearic acid | 1.5 | 1.5 | 1.5 | 1.5 | 1.5 | 1.5 |
| Armeen 18D | 0.5 | 0.5 | 0.5 | 0.5 | 0.5 | 0.5 |
| Naugard 445 | 2 | 2 | 2 | 2 | 2 | 2 |
| Diak1 | 1.5 | 1.5 | 1.5 | 1.5 | 1.5 | 1.5 |
| DOTG | | 4 | | | | |
| DBU | | | 1.3 | | | |
| XLA | | | | 3 | 3.7 | 4 |
| Total phr | 136.5 | 140.5 | 137.8 | 139.5 | 140.2 | 140.5 |
| | | | | | | |

| Rheology of Compounds | | | | | | |
|---|---|---|---|---|---|---|
| Mooney viscosity | | | | | | |
| ML (1 +4) @100°C [MU] | 35 | 32 | 34 | 32 | 31 | 31 |
| | | | | | | |
| Mooney scorch @ 120°C | | | | | | |
| T5 [min] | 9.0 | 9.0 | 5.9 | 8.8 | 8.6 | 8.6 |
| | | | | | | |
| MDR 180°C, 15 min | | | | | | |
| ML, [dNm] | 0.2 | 0.2 | 0.3 | 0.2 | 0.2 | 0.2 |
| MH, [dNm] | 5.0 | 9.4 | 11.1 | 10.4 | 10.3 | 10.3 |
| t10,[min] | 0.8 | 0.8 | 0.6 | 0.8 | 0.8 | 0.8 |
| t50, [min] | 2.9 | 2.2 | 1.5 | 2.3 | 2.1 | 2.1 |
| t90, [min] | 11.2 | 6.3 | 4.5 | 6.6 | 6.1 | 5.8 |
| Peak rate [dNm/min] | 1.3 | 3.1 | 5.3 | 3.4 | 3.5 | 3.7 |
| | | | | | | |
| Rheovulkameter @180°C | | | | | | |
| Flow max [cm³/s] | 0.08 | 0.1 1 | 0.09 | 0.10 | 0.11 | 0.11 |

### Example 2

In a manner analogous to that of Example 1, a series of seven additional compounds were prepared and tested. Compound 1 is the control and employed 4 parts per weight DOTG, Compounds 2 to 4 contained 0,3, 1.3 and 2.5 parts respectively per weight 1,8-diazabicyclo[5,4,0]undecene-7 (DBU), while compounds 5 to 7 employed 1.1, 1.5 and 3.0 parts respectively per weight dicyclohexylamine, The compounds 3, 4 and 5, 7 used the same molar amount of curative.

As seen in the data (Table 2), the compounds comprising dicyclohexylamine displayed good stability against premature scorch and flow properties when compared with compounds containing DOTG and DBU.

**Table 2. Properties of compounds prepared with different vulcanisation systems**

| Compound | 1 | 2 | 3 | 4 | 5 | 6 | 7 |
|---|---|---|---|---|---|---|---|
| AEM | 100 | 100 | 100 | 100 | 100 | 100 | 100 |
| Carbon Black, N-550 | 60 | 60 | 60 | 60 | 60 | 60 | 60 |
| Vanfre VAM | 1 | 1 | 1 | 1 | 1 | 1 | 1 |
| Stearic acid | 1.5 | 1.5 | 1.5 | 1.5 | 1.5 | 1.5 | 1.5 |
| Armeen 18D | 0.5 | 0.5 | 0.5 | 0.5 | 0.5 | 0.5 | 0.5 |
| Naugard 445 | 2 | 2 | 2 | 2 | 2 | 2 | 2 |
| Diak 1 | 1.5 | 1.5 | 1.5 | 1.5 | 1.5 | 1.5 | 1.5 |
| DOTG | 4 | | | | | | |
| DBU | | 0.3 | 1.3 | 2.5 | | | |
| Dicyclohexylamine | | | | | 1.1 | 1.5 | 3.0 |
| Total phr | 170.5 | 166.8 | 167.8 | 169.0 | 167.6 | 168.0 | 169.5 |
| | | | | | | | |
| Rheology of Compounds | | | | | | | |
| Mooney viscosity | | | | | | | |
| ML(1+4)@100°C[MU] | 67 | 78 | 75 | 74 | 76 | 70 | 64 |
| | | | | | | | |
| Mooney scorch @ 120°C | | | | | | | |
| T5 [min] | 6.0 | 6.0 | 4.5 | 3.4 | 6.5 | 7.0 | 7.5 |
| | | | | | | | |
| MDR 180°C, 15 min | | | | | | | |
| ML, [dNm] | 0.8 | 0.8 | 0.8 | 0.9 | 0.8 | 0.7 | 0.6 |
| MH, [dNm] | 16.0 | 16.9 | 18.0 | 18.5 | 15.2 | 15.5 | 15.1 |
| t10, [min] | 0.7 | 0.7 | 0.6 | 0.4 | 0.9 | 0.9 | 0.9 |
| t50, [min] | 1.9 | 2.3 | 1.5 | 1.0 | 3.3 | 3.0 | 3.0 |
| t90, [min] | 6. 7 | 8.2 | 4.9 | 2.9 | 12.1 | 11.2 | 10.5 |
| Peak rate [dNm/min] | 5.5 | 4.7 | 9.1 | 13.3 | 3.0 | 3.3 | 3.1 |
| | | | | | | | |
| Rheovulkameter @ 180°C | | | | | | | |
| Flow max [cm³/s] | 0.04 | 0.02 | 0.02 | 0.02 | 0.02 | 0.03 | 0.04 |

## Claims

1. A composition comprising
(1) a first vulcanisation accelerator selected from the group consisting of an amine, a salt thereof, an amidine, a salt thereof, and a mixture thereof,
(2) a second vulcanisation accelerator selected from the group consisting of a dithiophosphate (C₃-C₃₂) derivative or a zinc-dithiophosphate (C₃-C₃₂) derivative, a thiuram derivative, a zinc-dithiocarbamate derivative, and a mixture thereof.

2. The composition according to claim 1, wherein the first vulcanisation accelerator (1) is 1,8-diazabicyclo[5.4.0]undecene-7 or 1,5-diazabicyclo[4.3.0]nonene-5.

3. The composition according to claim 1 or 2, wherein the composition further comprises a filler selected from the group consisting of silica, carbon black, clay, talc, aluminum hydroxide, calcium carbonate, and magnesium carbonate.

4. The composition according to any of claims 1 to 3, wherein the composition further comprises a polymer as binding material selected from the group consisting of acrylate rubber, ethylene acrylate rubber, ethylene propylene diene terpolymer, ethylene propylene copolymer, ethylene vinyl acetate, ethylene methyl acrylate, and a mixture thereof.

5. The composition according to any of claims 1 to 4, wherein the composition further comprise additives selected from the group consisting of dispersants and plasticizers.

6. A process for the preparation of a composition according to any of claims 1 to 5, wherein the respective components are mixed together.

7. An use of the composition according to any of claims 1 to 5 as a cure activator concentrate for crosslinking ethylene acrylate elastomers or acrylate elastomers.

8. An ethylene acrylate elastomer or acrylate elastomer based compound which is prepared by crosslinking an ethylene acrylate elastomer or a polyacrylate elastomer by using the composition of vulcanisation accelerators according to any of claims 1 to 5.

9. The ethylene acrylate elastomer or acrylate elastomer according to claim 8, wherein the elastomer further comprises a diamine.

10. Use of the ethylene acrylate elastomer or acrylate elastomer according to claim 9 or 10 to achieve thermoset rubber articles, especially gaskets, seals, hoses, membrane and o-rings.

## Patentansprüche

1. Zusammensetzung, umfassend
(1) einen ersten Vulkanisationsbeschleuniger aus der Gruppe bestehend aus einem Amin, einem Salz davon, einem Amidin, einem Salz davon und einer Mischung davon,
(2) einen zweiten Vulkanisationsbeschleuniger aus der Gruppe bestehend aus einem Dithiophosphat-(C₃-C₃)-Derivat oder einem Zinkdithiophosphat-(C₃-C₃₂)-Derivat, einem Thiuram-Derivat, einem Zinkdithiocarbamat-Derivat und einer Mischung davon.

2. Zusammensetzung nach Anspruch 1, wobei es sich bei dem ersten Vulkanisationsbeschleuniger (1) um 1,8-Diazabicyclo[5.4.0]undecen-7 oder 1,5-Diazabicyclo[4.3.0]nonen-5 handelt.

3. Zusammensetzung nach Anspruch 1 oder 2, wobei die Zusammensetzung ferner einen Füllstoff aus der Gruppe bestehend aus Siliciumdioxid, Ruß, Ton, Talk, Aluminiumhydroxid, Calciumcarbonat und Magnesiumcarbonat umfaßt.

4. Zusammensetzung nach einem der Ansprüche 1 bis 3, wobei die Zusammensetzung ferner als Bindemittel ein Polymer aus der Gruppe bestehend aus Acrylat-kautschuk, Ethylen-Acrylat-Kautschuk, Ethylen-Propylen-Dien-Terpolymer, Ethylen-Propylen-Copolymer, Ethylen-Vinylacetat, Ethylen-Methylacrylat und einer Mischung davon umfaßt.

5. Zusammensetzung nach einem der Ansprüche 1 bis 4, wobei die Zusammensetzung ferner Additive aus der Gruppe bestehend aus Dispergiermitteln und Weichmachern umfaßt.

6. Verfahren zur Herstellung einer Zusammensetzung nach einem der Ansprüche 1 bis 5, bei dem man die jeweiligen Komponenten zusammenmischt.

7. Verwendung der Zusammensetzung nach einem der Ansprüche 1 bis 5 als Härtungsaktivatorkonzentrat zur Vernetzung von Ethylen-Acrylat-Elastomeren oder Acrylat-Elastomeren.

8. Compound auf Basis von Ethylen-Acrylat-Elastomer oder Acrylat-Elastomer, das durch Vernetzen eines Ethylen-Acrylat-Elastomers oder Polyacrylat-Elastomers durch Verwendung der Zusammensetzung von Vulkanisationsbeschleunigern nach einem der Ansprüche 1 bis 5 hergestellt wird.

9. Ethylen-Acrylat-Elastomer oder Acrylat-Elastomer nach Anspruch 8, wobei das Elastomer ferner ein Diamin umfaßt.

10. Verwendung des Ethylen-Acrylat-Elastomers oder Acrylat-Elastomers nach Anspruch 8 oder 9 zur Herstellung von duroplastischen Kautschukartikeln, insbesondere Dichtungen, Schläuchen, Membranen und O-Ringen.

## Revendications

1. Composition comprenant
(1) un premier accélérateur de vulcanisation choisi dans le groupe constitué par une amine, un sel de celle-ci, une amidine, un sel de celle-ci et un mélange de ceux-ci,
(2) un second accélérateur de vulcanisation choisi dans le groupe constitué par un dérivé en C₃-C₃₂ de dithiophosphate ou un dérivé en C₃-C₃₂ de dithiophosphate de zinc, un dérivé de thiurame, un dérivé de dithiocarbamate de zinc et un mélange de ceux-ci.

2. Composition selon la revendication 1, dans laquelle le premier accélérateur de vulcanisation (1) est le 1,8-diazabicyclo[5.4.0]undéc-7-ène ou le 1,5-diazabicyclo[4.3.0]non-5-ène.

3. Composition selon la revendication 1 ou 2, ladite composition comprenant en outre une matière de charge choisie dans le groupe constitué par la silice, le noir de carbone, l'argile, le talc, l'hydroxyde d'aluminium, le carbonate de calcium et le carbonate de magnésium.

4. Composition selon l'une quelconque des revendications 1 à 3, ladite composition comprenant en outre un polymère en tant que liant choisi dans le groupe constitué par un caoutchouc d'acrylate, un caoutchouc d'éthylène-acrylate, un terpolymère d'éthylène-propylène-diène, un copolymère d'éthylène-propylène, un éthylène-acétate de vinyle, un éthylène-acrylate de méthyle et un mélange de ceux-ci.

5. Composition selon l'une quelconque des revendications 1 à 4, ladite composition comprenant en outre des additifs choisis dans le groupe constitué par les dispersants et les plastifiants.

6. Procédé pour la préparation d'une composition selon l'une quelconque des revendications 1 à 5, dans lequel les composants respectifs sont mélangés ensemble.

7. Utilisation de la composition selon l'une quelconque des revendications 1 à 5 comme concentré activateur de durcissement pour la réticulation d'élastomères d'éthylène-acrylate ou d'élastomères d'acrylate.

8. Élastomère d'éthylène-acrylate ou élastomère d'acrylate à base d'un composé qui est préparé par réticulation d'un élastomère d'éthylène-acrylate ou d'un élastomère de polyacrylate à l'aide de la composition d'accélérateurs de vulcanisation selon l'une quelconque des revendications 1 à 5.

9. Élastomère d'éthylène-acrylate ou élastomère d'acrylate selon la revendication 8, ledit élastomère comprenant en outre une diamine.

10. Utilisation de l'élastomère d'éthylène-acrylate ou de l'Élastomère d'acrylate selon la revendication 8 ou 9 pour réaliser des articles en caoutchouc thermodurci, en particulier des joints statiques, des joints d'étanchéité, des tuyaux flexibles, une membrane et des joints toriques.
